# EUROPEAN PATENT APPLICATION

(11) **EP 4 723 355 A1**
(43) Date of publication of application: **08.04.2026**
(21) Application number: 24813671.5
(22) Date of filing: 02.01.2024
(51) Int. Cl.: H01M 50/502, H01M 50/298, H01M 50/249

(54) **BATTERY PACK AND VEHICLE COMPRISING SAME**

(30) Priority: 31.05.2023 CN 202310644459
(71) Applicant: BYD Company Limited, Shenzhen, Guangdong 518118 (CN)
(72) Inventor: ZHENG, Jianwu, Shenzhen, Guangdong 518118 (CN); WU, Xiangang, Shenzhen, Guangdong 518118 (CN); WANG, Yalei, Shenzhen, Guangdong 518118 (CN); LAI, Qing, Shenzhen, Guangdong 518118 (CN); WANG, Zhijie, Shenzhen, Guangdong 518118 (CN)
(74) Representative: Taor, Simon Edward William
(86) International application number: PCT/CN2024/070161
(87) International publication number: WO 2024/244464

(57) **Abstract**

A vehicle, comprising a battery pack. The battery pack comprises a case, a plurality of battery modules, and a conductive busbar. A power distribution cavity and a module cavity are defined in the case, and a total positive and a total negative are provided in the power distribution cavity. The plurality of battery modules are provided in the module cavity, the plurality of battery modules are provided with a first total connecting end, and the first total connecting end is connected to one of the total positive and the total negative. One end of the conductive busbar is connected to the plurality of battery modules, and the other end of the conductive busbar forms a second total connecting end. The second total connecting end of the conductive busbar extends into the power distribution cavity and is connected to the other one of the total positive and the total negative.

## Description

### CROSS-REFERENCE TO RELATED APPLICATIONS

The present disclosure claims priority to Chinese Patent Application No. 202310644459.4 filed with the China National Intellectual Property Administration on May 31, 2023, titled "BATTERY PACK AND VEHICLE COMPRISING SAME", which is incorporated herein by reference in its entirety.

### FIELD

The present disclosure relates to the field of vehicle technologies, specifically to a battery pack and a vehicle having the same.

### BACKGROUND

In the related art, a battery pack generally includes a housing, in which a power distribution cavity and a module cavity are constructed. The battery module is installed in the module cavity, and the battery module is connected with a conductive busbar. The conductive busbar extends into the power distribution cavity through an adapter and is electrically connected to the components in the power distribution cavity. However, such an arrangement not only requires connecting the conductive busbar and the adapter, resulting in multiple assembly steps, but also the insulation structure at the joint of the conductive busbar and the adapter is prone to failure, which in turn easily leads to arcing, resulting in greater potential safety hazards in electrical connections.

### SUMMARY

The present disclosure aims to solve at least one of the technical problems existing in the prior art. Therefore, it is an object of the present disclosure to provide a battery pack, and the battery pack has the advantages such as good insulation effect, prevention of arcing, and high safety of electrical connections.

The present disclosure also provides a vehicle having the above battery pack.

In order to achieve the above object, according to the embodiment of the first aspect of the present disclosure, a battery pack is provided. The battery pack includes a housing, a plurality of battery modules, and a conductive busbar. A power distribution cavity and a module cavity are defined in the housing. A total positive and a total negative are arranged in the power distribution cavity. The plurality of battery modules are arranged in the module cavity. The plurality of battery modules have a first total connecting end, and the first total connecting end is connected to one of the total positive and the total negative. One end of the conductive busbar is connected to the plurality of battery modules, and the other end of the conductive busbar forms a second total connecting end. The second total connecting end of the conductive busbar extends into the power distribution cavity and is connected to the other of the total positive and the total negative.

The battery pack according to the embodiment of the present disclosure has the advantages such as good insulation effect, prevention of arcing, and high safety of electrical connections.

According to some embodiments of the present disclosure, the conductive busbar includes a main section and a bent section. One end of the main section is connected to the plurality of battery modules, and the other end of the main section extends into the power distribution cavity. The bent section is located in the power distribution cavity, one end of the bent section is integrally connected to the other end of the main section, the bent section is bent toward the side of the main section facing the battery module, and the other end of the bent section forms a second total connecting end, and is connected to the other of the total positive and the total negative.

According to some embodiments of the present disclosure, a deformation zone is arranged in a portion of the main section located in the power distribution cavity, and the deformation zone is curved and convex to the side of the main section facing the battery module.

According to some embodiments of the present disclosure, the conductive busbar is an integral component.

According to some embodiments of the present disclosure, the main section includes a plurality of sub-segments along length direction thereof. The plurality of sub-segments are separately arranged, each of the sub-segments spans at least one battery module, and two adjacent sub-segments are connected together.

According to some embodiments of the present disclosure, the battery pack further includes a first partition beam. The first partition beam is arranged in the module cavity and located between the two adjacent battery modules. The adjacent ends of the two adjacent sub-segments are connected to each other and installed on the first partition beam.

According to some embodiments of the present disclosure, the battery pack further includes a second partition beam. The second partition beam is installed in the housing, and divides the inside of the housing into the power distribution cavity and the module cavity. A wire through hole is arranged on the second partition beam, and the conductive busbar extends into the power distribution cavity from the module cavity through the wire through hole.

According to some embodiments of the present disclosure, the battery pack further includes an insulator. The insulator is located between the second partition beam and the conductive busbar, and is located between the side wall of the housing and the conductive busbar.

According to some embodiments of the present disclosure, an insulating adhesive film is arranged on the outer surface of the conductive busbar.

According to some embodiments of the present disclosure, the battery pack further includes a side plate. The side plate is arranged in the module cavity and located on one side of the battery module. A positioning groove is arranged on the side plate, and the conductive busbar is installed in the positioning groove.

According to some embodiments of the present disclosure, the battery pack further includes a snap-fitting plate. The snap-fitting plate is snap-fitting on the side of the side plate facing away from the battery module, and restricts the conductive busbar in the positioning groove.

According to some embodiments of the present disclosure, the battery pack further includes aerogel and foam. The aerogel is arranged between the side plate and the battery module, and the foam is arranged on the side of the side plate facing away from the battery module and on the side of the conductive busbar facing away from the side plate.

According to some embodiments of the present disclosure, each of the battery modules includes a plurality of single batteries connected in series. The plurality of battery modules are arranged in the first direction and connected in series with each other. One of the two battery modules located at the outermost sides has a first total connecting end, and the other of the two battery modules located at the outermost sides is connected to one end of the conductive busbar. The first total connecting end and the second total connecting end are located on the same side of the plurality of battery modules in the first direction.

According to some embodiments of the present disclosure, the plurality of single batteries in each of the battery modules are stacked and arranged along a second direction orthogonal to the first direction, and the conductive busbar is located on one side of the plurality of battery modules in the second direction and extends along the first direction.

According to some embodiments of the present disclosure, the second total connecting end is arranged on one side adjacent to the plurality of the battery modules in the second direction, and the first total connecting end is arranged on the other side adjacent to the plurality of battery modules in the second direction.

According to the embodiment of the second aspect of the present disclosure, a vehicle is provided, and the vehicle includes the battery pack according to the embodiment of the first aspect of the present disclosure.

The vehicle according to the embodiment of the second aspect of the present disclosure, by utilizing the battery pack according to the embodiment of the first aspect of the present disclosure, has advantages such as good insulation effect, prevention of arcing, and high safety of electrical connections.

Additional aspects and advantages of the present disclosure will be partially given in the following description, and partially will become obvious from the following description, or be understood through the practice of the present disclosure.

### BRIEF DESCRIPTION OF THE DRAWINGS

The above and/or additional aspects and advantages of the present disclosure will become apparent and easily understood from the description of the embodiments in conjunction with the following accompanying drawings, wherein:
FIG. 1 is a schematic structural diagram of a battery pack according to an embodiment of the present disclosure.
FIG. 2 is another schematic structural diagram of the battery pack according to an embodiment of the present disclosure.
FIG. 3 is a detailed view of part A in FIG. 2.
FIG. 4 is a structural schematic diagram of the battery pack according to an embodiment of the present disclosure from another perspective.
FIG. 5 is a detailed view of part B in FIG. 4.
FIG. 6 is a schematic block diagram of a vehicle according to an embodiment of the present disclosure.

Reference numerals:
Vehicle 2,
Battery pack 1.
Housing 100, Power distribution cavity 110, Total positive 111, Total negative 112, Module cavity 120, First partition beam 130, Second partition beam 140, Wire through hole 141, Insulator 150,
Battery module 200, First total connecting end 210, Single battery 201,
Conductive busbar 300, Second total connecting end 310, Main section 320, Deformation zone 321, Sub-Segment 322, Bent section 330,
Side plate 400, Positioning groove 410, Snap-fitting plate 420,
Aerogel 500, Foam 600,
The first direction C, The second direction D.

### DETAILED DESCRIPTION

Embodiments of the present disclosure are described in detail below, and the embodiments described with reference to the accompanying drawings are exemplary.

In the description of this disclosure, it should be understood that the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential" and other terms indicating orientations or positional relationships are based on the orientations or positional relationships shown in the accompanying drawings. They are only used to facilitate the description of this disclosure and simplify the description, rather than indicating or implying that the referred device or element must have a specific orientation, be constructed and operated in a specific orientation. Therefore, they should not be construed as limitations on this disclosure.

In the description of the present disclosure, the "first feature" and the "second feature" may include one or more of the features.

In the description of the present disclosure, the meaning of "a plurality" is two or more.

In the description of the present disclosure, the first feature being "above" or "below" the second feature may include that the first and second features are in direct contact, or may include that the first and second features are not in direct contact but are in contact by a further feature therebetween.

In the description of the present disclosure, the first feature being "above", "on" and "up" the second feature includes the first feature being directly above and obliquely above the second feature, or simply means that the first feature is horizontally higher than the second feature.

Hereinafter, a battery pack 1 according to an embodiment of the present disclosure will be described with reference to the drawings.

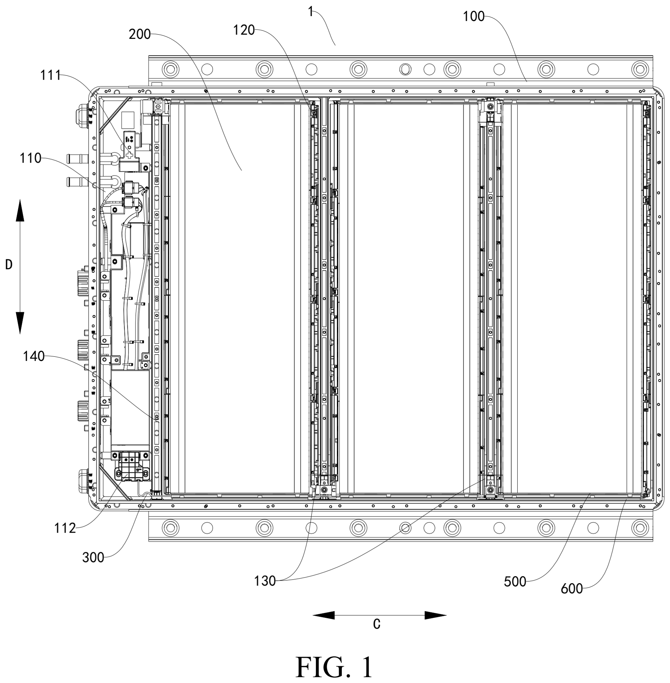

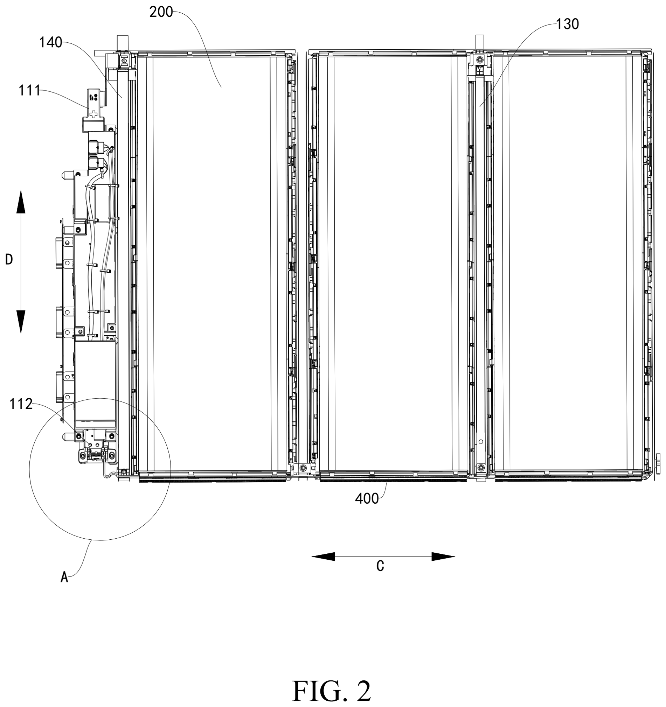

As shown in FIGS. 1 to 5, a battery pack 1 according to an embodiment of the present disclosure includes a housing 100, a plurality of battery modules 200, and a conductive busbar 300.

A power distribution cavity 110 and a module cavity 120 are defined in the housing 100. A total positive 111 and a total negative 112 are arranged in the power distribution cavity 110. The plurality of battery modules 200 are arranged in the module cavity 120. The plurality of battery modules 200 have a first total connecting end 210, and the first total connecting end 210 is connected to one of the total positive 111 and the total negative 112. One end of the conductive busbar 300 is connected to the plurality of battery modules 200, and the other end of the conductive busbar 300 forms a second total connecting end 310. The second total connecting end 310 of the conductive busbar 300 extends into the power distribution cavity 110 and is connected to the other of the total positive 111 and the total negative 112.

According to the battery pack 1 in the embodiment of the present disclosure, the power distribution cavity 110 and the module cavity 120 are defined in the housing 100, the total positive 111 and the total negative 112 are arranged in the power distribution cavity 110, and the plurality of battery modules 200 are arranged in the module cavity 120. In this way, the housing 100 can separate the power distribution cavity 110 from the module cavity 120, and the battery module 200 in the power distribution cavity 120 does not interfere with the components in the power distribution cavity 110. When the battery pack 1 is repaired or overhauled in the later stage, the maintenance personnel only need to repair the wiring harness or components in the power distribution cavity 110 to repair the battery pack 1, and the maintenance is more convenient, and the housing 100 can separate the battery module 200 from the wiring harness or components in the power distribution cavity 110 as much as possible, further improving the electrical connection safety of the battery pack 1.

In addition, the plurality of battery modules 200 have a first total connecting end 210, and the first total connecting end 210 is connected to one of the total positive 111 and the total negative 112. One end of the conductive busbar 300 is connected to the plurality of battery modules 200, and the other end of the conductive busbar 300 forms a second total connecting end 310. The second total connecting end 310 of the conductive busbar 300 extends into the power distribution cavity 110 and is connected to the other of the total positive 111 and the total negative 112. In this way, the second total connecting end 310 can also extends to one end of the battery module 200 close to the power distribution cavity 110 through the conductive busbar 300, that is, the first total connecting end 210 and the second total connecting end 310 can be located on the same side of the battery module 200, which is more convenient for the first total connecting end 210 and the second total connecting end 310 to electrically connect with the components in the power distribution cavity 110 respectively, and makes the layout of the electrical connection more reasonable. The electrical connection of the battery pack 1 is easier during assembly, which is beneficial to simplify the structure of the battery pack 1.

Furthermore, in the embodiment of the present disclosure, the second total connecting end 310 formed by the conductive busbar 300 directly extends into the power distribution cavity 110, that is, the conductive busbar 300 does not need to be connected with the adapter and then extends the adapter into the power distribution cavity 110. The length of the conductive busbar 300 is longer, and the conductive busbar 300 as a whole, the conductive busbar 300 can be insulated during processing, without assembling the conductive busbar 300 on the battery module 200 and then insulating, so that the insulation structure of the conductive busbar 300 is more complete and reliable, and is not easy to fail. After the conductive busbar 300 is directly extended into the power distribution cavity 110, the problem of insulation failure is not easy to occur in the conductive busbar 300 itself, and the insulation effect of the conductive busbar 300 at the transition point where the conductive busbar 300 is extended into the power distribution cavity 110 is better, so that the problem of arcing of the conductive busbar 300 can be avoided, which is beneficial to improving the safety of the electrical connection of the battery pack 1.

Thus, the battery pack 1 according to the embodiment of the present disclosure has the advantages such as good insulation effect, prevention of arcing, and high safety of electrical connections.

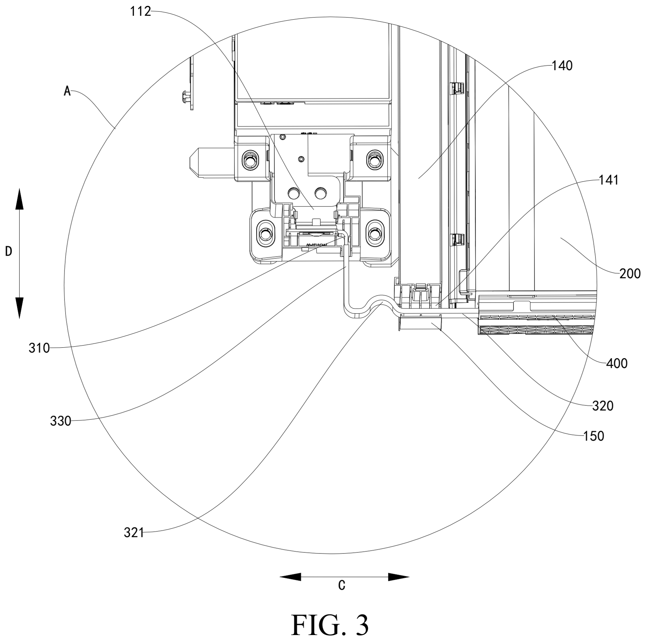

In some embodiments of the present disclosure, as shown in FIG. 3, the conductive busbar 300 includes a main section 320 and a bent section 330.

One end of the main section 320 is connected to the plurality of battery modules 200, and the other end of the main section 320 extends into the power distribution cavity 110. The bent section 330 is located in the power distribution cavity 110, one end of the bent section 330 is integrally connected to the other end of the main section 320, the bent section 330 is bent toward the side of the main section 320 facing the battery module 200, and the other end of the bent section 330 forms a second total connecting end 310, and is connected to the other of the total positive 111 and the total negative 112.

That is to say, the bent section 330 can be bent in a direction away from the edge of the battery pack 1, that is, the bent section 330 can be far away from the side wall of the power distribution cavity 110, and the space between the bent section 330 and the side wall of the power distribution cavity 110 is larger, so that space can be reserved for the end of the bent section 330 far away from the main section 320, so as to facilitate electrical connection between the end of the bent section 330 far away from the main section 320 and the components in the power distribution cavity 110, and avoid positional interference between the bent section 330 and the side wall of the power distribution cavity 110. In this way, the layout is more reasonable, which is beneficial to improving the insulation performance of the conductive busbar 300 at the bent section 330, further avoiding arcing.

In some embodiments of the present disclosure, as shown in FIG. 3, a deformation zone 321 is arranged in a portion of the main section 320 located in the power distribution cavity 110, and the deformation zone 321 is curved and convex to the side of the main section 320 facing the battery module 200.

It can be understood that the portion of the main section 320 extending into the power distribution cavity 110 causes the main section 320 to extend beyond the battery module 200 in the length direction. The deformation zone 321 is curved and convex toward one end of the battery module 200, and does not cause positional interference with the battery module 200, and the deformation zone 321 can be curved and convex in a direction away from the side wall of the power distribution cavity 110, so as to avoid positional interference between the deformation zone 321 and the side wall of the power distribution cavity 110.

Specifically, the deformation zone 321 can be deformed, the deformation zone 321 can be understood as a redundant part arranged by the conductive busbar 300. When the conductive busbar 300 does not stretch or compress the deformation zone 321, the conductive busbar 300 can maintain an initial length in the extending direction of the main section 320 and the extending direction of the bent section 330, and the battery module 200 is electrically connected to the components in the power distribution cavity 110 by the conductive busbar 300.

When the length of the conductive busbar 300 is insufficient, during the connection between the conductive busbar 300 and the components in the power distribution cavity 110, the deformation zone 321 can be deformed by stretching the conductive busbar 300 to increase the length of the conductive busbar 300 in the extending direction of the main section 320 or the length in the extending direction of the bent section 330. Thus the assembly error can be compensated by the conductive busbar 300 itself, which facilitates the connection between the conductive busbar 300 and the components in the power distribution cavity 110, improves the installation adaptability of the conductive busbar 300 and makes the installation more convenient.

When the length of the conductive busbar 300 is too long, during the connection between the conductive busbar 300 and the components in the power distribution cavity 110, the deformation zone 321 can be deformed by compressing the conductive busbar 300 to reduce the length of the conductive busbar 300 in the extending direction of the main section 320 or the length in the extending direction of the bent section 330. Thus the assembly error can be reduced by the conductive busbar 300 itself, which facilitates the connection between the conductive busbar 300 and the components in the power distribution cavity 110, improves the installation adaptability of the conductive busbar 300 and makes the installation more convenient.

In some embodiments of the present disclosure, the conductive busbar 300 is an integral component, that is, the battery pack 1 has only one conductive busbar 300. One battery module 200 away from the power distribution cavity 110 among the plurality of battery modules 200 can be connected to one end of the conductive busbar 300, and the conductive busbar 300 extends in a direction close to the power distribution cavity 110 and extends into the power distribution cavity 110. This arrangement can not only improve the structural strength of the conductive busbar 300, make the integrity of the conductive busbar 300 better, but also help to improve the electrical connection stability of the conductive busbar 300. Moreover, during assembly, the conductive busbar 300 can be assembled into the housing 100 in one step, resulting in fewer assembly steps and more convenient and efficient assembly.

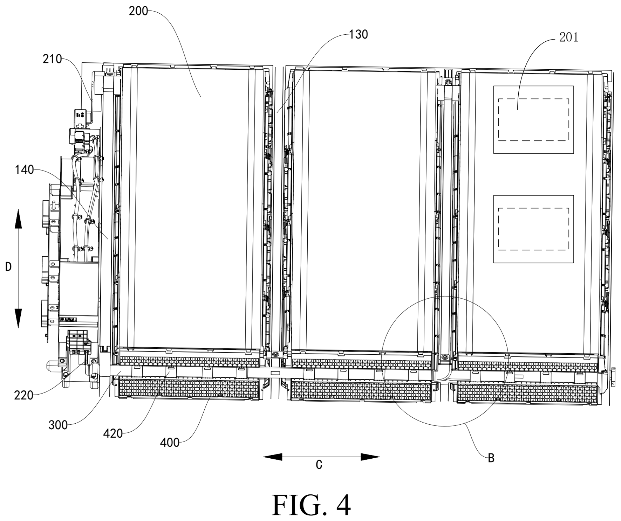

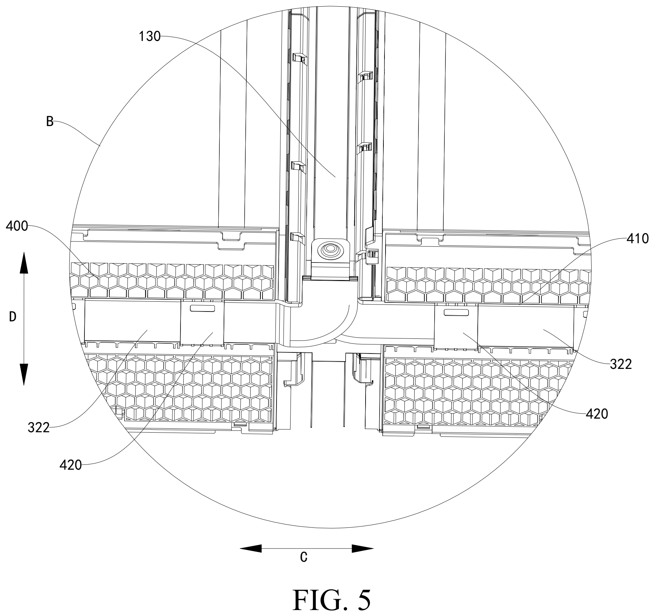

In other embodiments of the present disclosure, as shown in FIGS. 4 and 5, the main section 320 includes a plurality of sub-segments 322 along length direction thereof. The plurality of sub-segments 322 are separately arranged, each of the sub-segments 322 spans at least one battery module 200, and two adjacent sub-segments 322 are connected together.

For example, each of the sub-segments 322 can correspond to one battery module 200. When a single battery module 200 is assembled, a sub-segment 322 can be assembled with the corresponding battery module 200 together, and when a plurality of battery modules 200 are assembled, the sub-segments 322 on adjacent battery modules 200 are then connected together. In this way, the length of the single sub-segment 322 can be shorter, and the occupied space can be smaller, thereby avoiding space waste of the entire conductive busbar 300 at the assembly station and helping to improve the assembly efficiency of the battery pack 1. Moreover, when the conductive busbar 300 is stored, the occupied space of the sub-segment 322 can also be smaller, thereby reducing the demand for storage space in the workshop and making storage more convenient. In addition, compared with the integrated conductive busbar 300, dividing the conductive busbar 300 into a plurality of sub-segments 322 can improve the production efficiency of the conductive busbar 300, reduce the costs of tooling fixtures and logistics, and thus lower the production and transportation costs of the conductive busbar 300.

In some embodiments of the present disclosure, as shown in FIGS. 1 to 5, the battery pack 1 further includes a first partition beam 130.

The first partition beam 130 is arranged in the module cavity 120 and located between the two adjacent battery modules 200. The adjacent ends of two adjacent sub-segments 322 are connected to each other and installed on the first partition beam 130.

For example, a plastic insulating bracket can be arranged on the first partition beam 130, and two adjacent sub-segments 322 can be fixed to the plastic bracket of the first partition beam 130 by riveting and laser welding after being connected to each other, so that the plastic insulating bracket can also provide insulation between the first partition beam 130 and the conductive busbar 300. Of course, the fixing methods are not limited to riveting and laser welding, and other fixing methods can also be used to fix the sub-segments 322 to the first partition beam 130.

In this way, the first partition beam 130 can not only be used to separate the two adjacent battery modules 200, but also be used to support and fix the two adjacent sub-segments 322, and the junction of the two adjacent sub-segments 322 can be fixed on the first partition beam 130, which is beneficial to improving the connection strength of the sub-segments 322, avoiding the damage of the junction of the two adjacent sub-segments 322, and further avoiding the separation of the two adjacent sub-segments 322, and making the electrical connection stability of the conductive busbar 300 higher.

In some embodiments of the present disclosure, as shown in FIGS. 1 to 5, the battery pack 1 further includes a second partition beam 140.

The second partition beam 140 is installed in the housing 100, and divides the inside of the housing 100 into the power distribution cavity 110 and the module cavity 120. A wire through hole 141 is arranged on the second partition beam 140, and the conductive busbar 300 extends into the power distribution cavity 110 from the module cavity 120 through the wire through hole 141.

In this way, the second partition beam 140 can separate the power distribution cavity 110 from the module cavity 120, avoiding positional interference between the battery module 200 and the components in the power distribution cavity 110. Moreover, by arranging the wire through hole 141 on the second partition beam 140, the conductive busbar 300 is easily extended into the power distribution cavity 110, so that positional interference between the conductive busbar 300 and the second partition beam 140 does not occur. In addition, since arcing is prone to occur at the transition point where the conductive busbar 300 extends into the power distribution cavity 110, the above arrangement can enable the second partition beam 140 to avoid the transition point where the conductive busbar 300 extends into the power distribution cavity 110, preventing the conductive busbar 300 from being crushed and damaged there, thereby avoiding arcing and further improving the safety of electrical connection.

In some embodiments of the present disclosure, as shown in FIG. 3, the battery pack 1 further includes an insulator 150.

The insulator 150 is located between the second partition beam 140 and the conductive busbar 300, and is located between the side wall of the housing 100 and the conductive busbar 300. In this way, the insulation between the conductive busbar 300 and the second partition beam 140, and between the conductive busbar 300 and the side wall of the housing 100 are effectively improved, and the insulation effect between the conductive busbar 300 and the second partition beam 140, and insulation effect between the conductive busbar 300 and the housing 100, which further prevents the conductive busbar 300 from arcing and helps improve the electrical connection safety of the battery pack 1.

In some embodiments of the present disclosure, an insulating adhesive film is arranged on the outer surface of the conductive busbar 300. In this way, the overall insulation performance of the conductive busbar 300 is stronger. Except that one end of the conductive busbar 300 is electrically connected to the battery module 200 and the other end is electrically connected to the components in the power distribution cavity 110, the insulation of the rest of the conductive busbar 300 is better, which prevents electrical conduction between the conductive busbar 300 and other components, further avoids arcing in the conductive busbar 300, effectively improves the electrical connection safety of the conductive busbar 300, and also enhances the electrical connection safety of the battery pack 1.

In some embodiments of the present disclosure, as shown in FIGS. 4 and 5, the battery pack 1 further includes a side plate 400. The side plate 400 is arranged in the module cavity 120 and located on one side of the battery module 200. A positioning groove is arranged on the side plate 400, and the conductive busbar 300 is installed in the positioning groove 410. The side plate 400 can be formed by injection molding and can be made of an insulating material, such as plastic.

In this way, the conductive busbar 300 can be arranged between the side plate 400 and the housing 100, and the heat generated by the conductive busbar 300 can be dissipated outward through the housing 100, thereby improving the service life of the conductive busbar 300 and reducing the risk of failure of the conductive busbar 300 due to excessive temperature.

By fixing the side plate 400 on one side of the battery module 200, the side plate 400 can more effectively support and fix the side of the battery module 200, and further the outward expansion of the side of the battery module 200 can be more effectively restricted by the side plate 400, so that the consistency of the battery module 200 on the side is higher, and the protective effect on the battery module 200 can be improved, which is beneficial to prolonging the life of the battery pack 1.

Moreover, by forming a positioning groove 410 on the side plate 400 and installing the conductive busbar 300 in the positioning groove 410, the side plate 400 can be used to fix the conductive busbar 300 without the need for additional components to fix the conductive busbar 300. In addition, the installation of the conductive busbar 300 in the positioning groove 410 not only allows the positioning groove 410 to reliably fix the conductive busbar 300, but also enables limiting and protection of the conductive busbar 300. Furthermore, the conductive busbar 300 does not occupy extra internal space of the battery pack 1, which is beneficial to improving the utilization rate of the internal space of the battery pack 1, thereby avoiding increasing the volume of the battery pack 1, making the volume of the battery pack 1 smaller, and making the installation and fixation more convenient.

In addition, the positioning groove 410 can be arranged on the side of the side plate 400 facing away from the battery module 200. That is, the positioning groove 410 is located on the outer side of the side plate 400. In this way, after the side plate 400 and the battery module 200 are fixed, the positioning groove 410 will not be blocked by the battery module 200 or the side plate 400 itself, which is convenient to install the conductive busbar 300 into the positioning groove 410. Moreover, after the conductive busbar 300 is installed in the positioning groove 410, the side plate 400 itself can separate the battery module 200 from the conductive busbar 300, preventing the battery module 200 from directly contacting the middle part of the conductive busbar 300, thereby avoiding short circuits in the battery pack 1.

In some embodiments of the present disclosure, as shown in FIGS. 4 and 5, the battery pack 1 further includes a snap-fitting plate 420. The snap-fitting plate 420 is snap-fitting on the side of the side plate 400 facing away from the battery module 200, and restricts the conductive busbar 300 in the positioning groove 410.

A plurality of snap-fitting plates 420 are configured, and the plurality of snap-fitting plates 420 can be arranged at intervals along the length direction of the conductive busbar 300, so that the snap-fitting plates 420 can fix the conductive busbar 300 in the positioning groove 410, preventing the conductive busbar 300 from being separated from the positioning groove 410, further improving the fixing reliability of the conductive busbar 300, and having better limiting and protective effects on the conductive busbar 300.

In some embodiments of the present disclosure, as shown in FIG. 1, the battery pack 1 further includes aerogel 500 and foam 600.

The aerogel 500 is arranged between the side plate 400 and the battery module 200, and the foam 600 is arranged on the side of the side plate 400 facing away from the battery module 200 and on the side of the conductive busbar 300 facing away from the side plate 400. In this way, the aerogel 500 can be used for sound insulation and heat insulation of the battery module 200 to prevent the external temperature from affecting the battery pack 1. The foam 600 can have a certain buffering effect on the battery module 200, which can effectively prevent the cycle diving of the outermost single battery 201 in each of the battery modules 200, so as to improve the consistency of the single batteries 201 in each of the battery modules 200 and further enhance the consistency of the plurality of battery modules 200.

In some embodiments of the present disclosure, as shown in FIGS. 1 to 5, each of the battery modules 200 includes a plurality of single batteries 201 connected in series. The plurality of battery modules 200 are arranged in the first direction C and connected in series with each other. One of the two battery modules 200 located at the outermost sides has a first total connecting end 210, and the other of the two battery modules 200 located at the outermost sides is connected to the above end of the conductive busbar 300. The first total connecting end 210 and the second total connecting end 310 are located on the same side of the plurality of battery modules 200 in the first direction C.

The first direction C can be the length direction of the battery pack 1 (i.e., the direction indicated by arrow C).

In this way, the first total connecting end 210 can extend from one side of the outermost battery module 200, so as to facilitate the electrical connection between the plurality of battery modules 200 and the components in the power distribution cavity 110 through the first total connecting end 210. Moreover, the second total connecting end 310 can be extended to the same side as the first total connecting end 210 through the conductive busbar 300. As a result, both the first total connecting end 210 and the second total connecting end 310 can extend from the same side of the plurality of battery modules 200, which is more convenient for the first total connecting end 210 and the second total connecting end 310 to electrically connect with the components in the power distribution cavity 110 respectively, makes the layout of the electrical connection more reasonable, and helps simplify the structure of the battery pack 1.

In some embodiments of the present disclosure, as shown in FIGS. 1 to 5, the plurality of single batteries 201 in each of the battery modules 200 are stacked and arranged along a second direction orthogonal to the first direction C, and the conductive busbar 300 is located on one side of the plurality of battery modules 200 in the second direction and extends along the first direction.

The first direction C can be the length direction of the battery pack 1 (i.e., the direction indicated by arrow C), and the second direction D can be the width direction of the battery pack 1 (i.e., the direction indicated by arrow D).

With such an arrangement, the plurality of single batteries 201 in each of the battery modules 200 can be arranged along the width direction of the battery pack 1, while the plurality of battery modules 200 can be arranged along the length direction of the battery pack 1. In this way, the space in the width direction and the space in the length direction of the battery pack 1 can be fully utilized, avoiding excessively large dimensions in the length direction of the battery pack 1 or in the width direction of the battery pack 1. As a result, the length and width dimensions of the battery pack 1 are more reasonable, the overall structure of the battery pack 1 is more stable, which is more convenient to install and fix, and less likely to be deformed or damaged.

In addition, the conductive busbar 300 is located on one side of the plurality of battery modules 200 in the second direction D and extends along the first direction C, that is, the conductive busbar 300 extends along the arrangement direction of the plurality of battery modules 200. In this way, one end of the conductive busbar 300 is connected to the outermost battery module 200 which is far away from the power distribution cavity 110, and the other end can extend to the outside of the outermost battery module 200 which is close to the power distribution cavity 110 to form the second total connecting end 310, so that the first total connecting end 210 and the second total connecting end 310 can be located on the same side of the battery module 200, making connection easier.

In some embodiments of the present disclosure, as shown in FIGS. 1 to 5, the first total connecting end 210 is arranged on the other side adjacent to the plurality of battery modules 200 in the second direction D.

That is to say, the conductive busbar 300 is located on one side of the battery module 200 in the second direction D, that is, the second total connecting end 310 is arranged on one side adjacent to the battery module 200 in the second direction D, while the first total connecting end 210 is arranged on the other side adjacent to the battery module 200 in the second direction D. In this way, the first total connecting end 210 and the second total connecting end 310 can not only be located on the same side of the battery module 200 in the first direction C, but also be arranged adjacent to the opposite sides of the battery module 200 in the second direction D. This not only facilitates the electrical connections between the first total connecting end 210 and the components in the power distribution cavity 110, and between the second total connecting end 310 and the components in the power distribution cavity 110, but also separates the first total connecting end 210 from the second total connecting end 310 in the second direction D, thereby preventing positional interference between the first total connecting end 210 and the second total connecting end 310, effectively avoiding short circuits in the battery pack 1, and enhancing the safety of electrical connections.

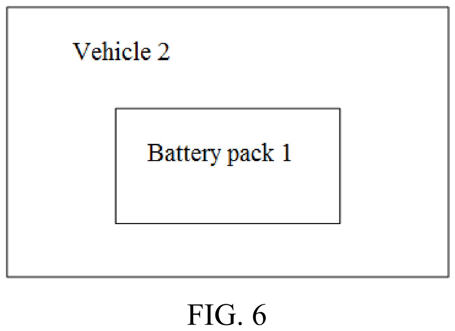

The vehicle 2 according to the embodiment of the present disclosure will be described below with reference to the accompanying drawings. The vehicle 2 includes the battery pack 1 according to any one of the above embodiments of the present disclosure, as shown in FIG. 6.

The vehicle 2 according to the embodiment of the present disclosure, by utilizing the battery pack 1 according to any one of the above embodiments of the present disclosure, has advantages such as good insulation effect, prevention of arcing, and high safety of electrical connections.

Other configurations and operations of the battery pack 1 and the vehicle 2 including the battery pack 1 according to the embodiment of the present disclosure are known to a person skilled in the art, and will not be described in detail here.

In the description of the present disclosure, reference is made to the description of the terms "one embodiment", "some embodiments", "exemplary embodiments", "examples", "specific examples", or "some examples", etc., which means that a specific feature, structure, material, or characteristic described in connection with the embodiment or example is included in at least one embodiment or example of the present disclosure. In this disclosure, schematic expressions of the above terms do not necessarily refer to the same embodiments or examples.

While embodiments of the present disclosure have been shown and described, a person skill in the art will understand that various changes, modifications, substitutions, and variations can be made to these embodiments without departing from the principles and spirits of the present disclosure, the scope of which is defined by the claims and their equivalents.

## Claims

1. A battery pack (1), comprising:
a housing (100), a power distribution cavity (110) and a module cavity (120) being defined in the housing (100), and a total positive (111) and a total negative (112) being arranged in the power distribution cavity (110);
a plurality of battery modules (200), the plurality of battery modules (200) being arranged in the module cavity (120), the plurality of battery modules (200) having a first total connecting end (210), and the first total connecting end (210) being connected to one of the total positive (111) and the total negative (112); and
a conductive busbar (300), one end of the conductive busbar (300) being connected to the plurality of battery modules (200), and the other end of the conductive busbar (300) forming a second total connecting end (310), and the second total connecting end (310) of the conductive busbar (300) extending into the power distribution cavity (110) and being connected to the other of the total positive (111) and the total negative (112).

2. The battery pack (1) according to claim 1, wherein the conductive busbar (300) comprises:
a main section (320), one end of the main section (320) is connected to the plurality of battery modules (200), and the other end of the main section (320) extends into the power distribution cavity (110); and
a bent section (330), the bent section (330) is located in the power distribution cavity (110), one end of the bent section (330) is integrally connected to the other end of the main section (320), the bent section (330) is bent toward one side of the main section (320) facing the battery module (200), and the other end of the bent section (330) forms the second total connecting end (310), and is connected to the other of the total positive (111) and the total negative (112).

3. The battery pack (1) according to claim 2, wherein a portion of the main section (320) located in the power distribution cavity (110) is provided with a deformation zone (321), and the deformation zone (321) is curved and convex to the side of the main section (320) facing the battery module (200).

4. The battery pack (1) according to claim 2 or 3, wherein the conductive busbar (300) is an integral component.

5. The battery pack (1) according to any one of claims 2 to 4, wherein the main section (320) comprises a plurality of sub-segments (322) along length direction thereof, the plurality of sub-segments (322) are separately arranged, each of the sub-segments (322) spans at least one battery module (200), and two adjacent sub-segments (322) are connected together.

6. The battery pack (1) according to claim 5, wherein the battery pack further comprises:
a first partition beam (130), the first partition beam (130) is arranged in the module cavity (120) and located between the two adjacent battery modules (120), and adjacent ends of the two adjacent sub-segments (322) are connected to each other and installed on the first partition beam (130).

7. The battery pack (1) according to any one of claims 1 to 6, wherein the battery pack further comprises:
a second partition beam (140), the second partition beam (140) is installed in the housing (100), and divides the inside of the housing (100) into the power distribution cavity (110) and the module cavity (120), a wire through hole (141) is arranged on the second partition beam (140), and the conductive busbar (300) extends into the power distribution cavity (110) from the module cavity (120) through the wire through hole (141).

8. The battery pack (1) according to claim 7, wherein the battery pack further comprises:
an insulator (150), the insulator (150) is located between the second partition beam (140) and the conductive busbar (300), and is located between the side wall of the housing (100) and the conductive busbar (300).

9. The battery pack (1) according to any one of claims 1 to 8, wherein an insulating adhesive film is arranged on the outer surface of the conductive busbar (300).

10. The battery pack (1) according to any one of claims 1 to 9, wherein the battery pack further comprises:
a side plate (400), the side plate (400) is arranged in the module cavity (120) and located on one side of the battery module (200), a positioning groove (410) is arranged on the side plate (400), and the conductive busbar (300) is installed in the positioning groove (410).

11. The battery pack (1) according to claim 10, wherein the battery pack further comprises:
a snap-fitting plate (420), the snap-fitting plate (420) is snap-fitting on the side of the side plate (400) facing away from the battery module (200), and restricts the conductive busbar (300) in the positioning groove (410).

12. The battery pack (1) according to claim 10 or 11, wherein the battery pack further comprises:
aerogel (500), the aerogel (500) is arranged between the side plate (400) and the battery module(200); and
foam (600), the foam (600) is arranged on the side of the side plate (400) facing away from the battery module (200) and on the side of the conductive busbar (300) facing away from the side plate (400).

13. The battery pack (1) according to any one of claims 1 to 12, wherein each of the battery modules (200) comprises a plurality of single batteries (201) connected in series, the plurality of battery modules (200) are arranged in the first direction (C) and connected in series with each other, one of the two battery modules (200) located at the outermost sides has a first total connecting end (210), and the other of the two battery modules (200) located at the outermost sides is connected to one end of the conductive busbar (300), and the first total connecting end (210) and the second total connecting end (310) are located on the same side of the plurality of battery modules (200) in the first direction (C).

14. The battery pack (1) according to claim 13, wherein the plurality of single batteries (201) in each of the battery modules (200) are stacked and arranged along a second direction (D) orthogonal to the first direction (C), and the conductive busbar (300) is located on one side of the plurality of battery modules (200) in the second direction (D) and extends along the first direction (C).

15. The battery pack (1) according to claim 13 or 14, wherein the second total connecting end (310) is arranged on one side adjacent to the plurality of the battery modules (200) in the second direction (D), and the first total connecting end (210) is arranged on the other side adjacent to the plurality of battery modules (200) in the second direction (D).

16. A vehicle (2), comprising a battery pack (1) according to any one of claims 1 to 15.
